# EUROPÄISCHE PATENTSCHRIFT

(11) **EP 0 430 083 B1**
(45) Veröffentlichungstag und Bekanntmachung des Hinweises auf die Patenterteilung: **15.03.1995**
(21) Anmeldenummer: 90122339.6
(22) Anmeldetag: 22.11.1990
(51) Int. Cl.: F16F 15/02, F16C 27/04, F16F 9/52

(54) **Verfahren und Anordnung zur Regulierung der Dämpfung von rotierenden Massen**
Method and arrangement for the regulation of the damping of rotating masses
Méthode et disposition pour le réglage d'amortissement de masses rotatives

(30) Priorität: 23.11.1989 DE 3938770
(43) Veröffentlichungstag der Anmeldung: 05.06.1991
(73) Patentinhaber: MTU MOTOREN- UND TURBINEN-UNION MÜNCHEN GMBH, D-80976 München (DE)
(72) Erfinder: Wöhrl, Berhard, Dr., W-8035 Gauting (DE)

(56) Entgegenhaltungen:
- EP-A- 0 124 472
- EP-A- 0 342 882
- DE-A- 2 264 605
- FR-A- 2 643 430
- GB-A- 2 218 751
- US-A- 4 085 982
- PATENT ABSTRACTS OF JAPAN vol. 9, no. 67 (M-366)(1790) 27 März 1985,& JP-A-59 200832 (ATSUGI) 14 November 1984,

## Beschreibung

Die Erfindung betrifft ein Verfahren gemäß oberbegriff des Anspruchs 1 und eine Anordnung gemäß oberbegriff des Anspruchs 5 zur Regulierung der mittels Ölquetschfilm in einem Ölquetschspalt erfolgenden Dämpfung von auf Wälzlagern rotierenden Massen. Ein derartiges Verfahren und eine derartige Anordnung sind aus der GB-A-2 218 751 bekannt.

Der Ölquetschfilm gemaß GB-A-2 218 751 ist zwischen Lagergehäuse und Federkäfig eines Wellenlagers angeordnet. Der Ölquetschfilm soll in Zusammenwirken mit dem Federkäfig als Feder-Dämpfungs-System einer fertigungsbedingten Unwucht von auf Wälzlagern rotierender Massen entgegenwirken und einen sicheren Abstand zwischen der Eigenfrequenz bzw. den Oberschwingungen eines rotierenden Systems und den Betriebsfrequenzen gewährleisten. Dazu wird eine theoretisch erforderliche Dämpfung für den Ölquetschfilm und eine Federkonstante für den Federkäfig berechnet und die Geometrie des Ölquetschspaltes, dessen Spaltbreite zwischen 3.10⁻³ und 5.10⁻³ d (d=Nenndurchmesser) liegt, konstruktiv ausgelegt. Ein Nachteil der bekannten Ölquetschfilmanordnungen ist, daß nach Fertigstellung des Ölquetschspaltes und bei unbefriedigendem Ergebnis eines Probelaufs der rotierenden Massen nur die Federkonstante des Federkäfigs durch mechanische Nachbearbeitung des Federquerschnitts nachgebessert werden kann. Eine Nachbesserung oder Regulierung des Dämpfungsverhaltens während des Betriebs zur Erzielung einer verbesserten Laufruhe eines rotierenden Systems ist nicht möglich.

Aufgabe der Erfindung ist es, ein Verfahren gemäß oberbegriff des Anspruchs 1 und eine Anordnung gemäß oberbegriff des Anspruchs 5 so weiterzuentwickeln, daß die Laufruhe rotierender Massen verbessert wird. Diese Verbesserung soll mit Maßnahmen erreicht werden, die keine Betriebsunterbrechung erfordern. Verfahren und Anordnung sollen auftretende Änderungen im Schwingungsverhalten erfassen und derart dämpfen, daß ein Ausfall oder eine Zerstörung des rotierenden Systems vermieden wird.

Gelöst wird die Aufgabe ein Verfahren anzugeben, dadurch, daß die momentane Viskosität des Öls durch Temperaturerfassung des Ölquetschfilms und das Schwingungsverhalten der rotierenden Massen in Frequenz und Amplitude gemessen werden, und diese drei Signale über einen Rechner miteinander verknüpft werden und daß der Rechner die Temperatur einer Heiz-/Kühlvorrichtung steuert, die das Öl im Ölquetschspalt erwärmt/abkühlt und somit die Viskosität des Öls im Ölquetschspalt so verändert, daß eine optimale Laufruhe der rotierenden Massen erhalten wird.

Der Vorteil dieses Verfahrens ist, daß die Dämpfung des Ölfilms dem Schwingungsverhalten der rotierenden Massen ohne geometrische Änderung des Ölquetschspaltes angepaßt werden kann. Darüberhinaus können größere Fertigungstoleranzen bei der Herstellung des Ölquetschspaltes zugelassen werden, da die Dämpfungswirkung des Ölquetschfilms über die Öltemperatur regulierbar wird. Schließlich vermeidet dieses Verfahren die Kosten einer Nachbesserung der geometrischen Gestaltung des Feder-Dämpfungs-Systems.

Eine bevorzugte Ausführung des Verfahrens sieht vor, daß die Temperatursteuerung des Öls durch Wärmetausch einer an den Ölquetschfilm herangeführten Heiz-/Kühlflüssigkeit wie Öl, Wasser, Methanol oder Glysantin erfolgt. Durch den intensiven Wärmetausch zwischen Heiz-/Kühlflüssigkeit, Berührungsflächen und Ölquetschfilm wird die Viskosität des Öls im Ölquetschspalt bei einer Kühlung oder Aufheizung herauf bzw. herabgesetzt. Dadurch kann die Dämpfung des Ölquetschfilms den Betriebszuständen des rotierenden Systems angepaßt werden.

Eine weitere bevorzugte Ausführung des Verfahrens sieht vor, daß die Temperatursteuerung mittels elektrischer Stromsteuerung von Peltierelementen erfolgt, die im Bereich des Ölquetschfilms angeordnet sind. Diese Ausführung hat den Vorteil, daß keine flüssigen Medien zu transportieren, abzudichten oder thermisch zu regeln sind.

Das Verfahren wird bevorzugt eingesetzt, um die Dämpfungskonstante des rotierenden Systems um dem Faktor 0,5 bis 2 durch Kühlung und Heizung des Ölquetschfilms zu variieren, womit eine verbesserte Laufruhe für rotierende Massen möglich wird.

Die Aufgabe, eine Anordnung zur Durchführung des Verfahrens anzugeben, wird durch die Merkmale des Anspruchs 5 gelöst.

Diese Anordnung hat den Vorteil, daß eine indirekte Aufheizung und Abkühlung des im wesentlichen stehenden Ölquetschfilms erreicht wird. Durch die indirekte Aufheizung und Abkühlung des Ölquetschfilms ist eine Änderung der Öltemperatur mit geringeren Zeitkonstanten erreichbar als durch einen Austausch des stehenden Öls im Ölquetschfilm durch heißeres bzw. kühleres Öl . Ferner läßt die indirekte Aufheizung bzw. Abkühlung des Ölquetschfilms eine höhere Temperaturstabilität zu. Die Verknüpfung des Schwingungszustands der rotierenden Massen mit den gemessenen Daten für Öltemperatur (Ölviskosität) über einen Rechner wie beispielsweise einen Mikroprozessor hat den Vorteil, daß kurzfristig auf Änderungen in der Laufruhe des rotierenden Systems reagiert werden kann.

Diese Reaktion erfolgt bei der bevorzugten Ausführung der Anordnung mit Kanälen, die den Ölquetschspalt schraubenförmig im Bereich des Ölquetschfilms umgeben, über Verbindungsleitungen, durch die die temperaturregulierte Heiz-/Kühlflüssigkeit den Kanälen aus einem beheiz- und kühlbaren Heiz-/Kühlflüssigkeitsvorratsbehälters zugeführt wird. In diesen Heiz-/Kühlvorratsbehälter taucht beispielsweise eine vom Rechner gesteuerte Heizspirale. Eine derartige Heiz-/Kühlvorrichtung bildet vorteilhaft einen geschlossenen Kreislauf.

Eine weitere bevorzugte Ausführung der Anordnung besteht darin, daß die Heiz-/Kühlvorrichtung Peltierelemente, die schalenförmig die Berührungsflächen des Ölquetschfilms umgeben, aufweist. Diese Heiz-/Kühlvorrichtung hat den Vorteil, daß sie nur statische Funktionselemente aufweist und damit weniger störanfällig ist als Heiz-/Kühlvorrichtungen, die bewegliche oder fließende Funktionselemente erfordern.

Bei entsprechender Eigenkühlung des rotierenden Systems im Lagerbereich sind auch ohmsche Heizvorrichtungen zur Regulierung der Öltemperatur des Ölquetschfilms möglich. Derartige Heizvorrichtungen haben den Vorteil eines geringeren Einbauvolumens und einer flexiblen konstruktiven Gestaltungsmöglichkeit.

Da der Ölquetschspalt eine Weite zwischen 100 und 300 »m aufweist, sieht eine bevorzugte Ausbildung der Vorrichtung vor, daß mindestens die gehäuseseitige Berührungsfläche des Ölquetschfilms eine Heiz-/Kühlvorrichtung aufweist. Eine einseitige Beheizung oder Kühlung des Ölquetschfilms kann vorteilhaft vorgesehen werden, wenn die gegenüberliegende Berührungsfläche des Ölquetschfilms aus einer Wärmedämmschicht besteht.

Die Zeitkonstante für die Regulierung der Temperatur des Ölquetschfilms kann erheblich verbessert werden, wenn die Heiz-/Kühlelemente der Heiz-/Kühlvorrichtung bevorzugt von einer Wärmedämmschicht zum umgebenden Gehäuse hin umschlossen werden.

Die folgenden Figuren sind Ausführungsbeispiele der Erfindung.
- Fig. 1: zeigt ein Feder-Dämpfungssystem von auf Wälzlagern rotierenden Massen ohne Regulierung oder Dämpfung,
- Fig. 2: zeigt ein Feder-Dämpfungssystem mit Regulierung der Dämpfung.

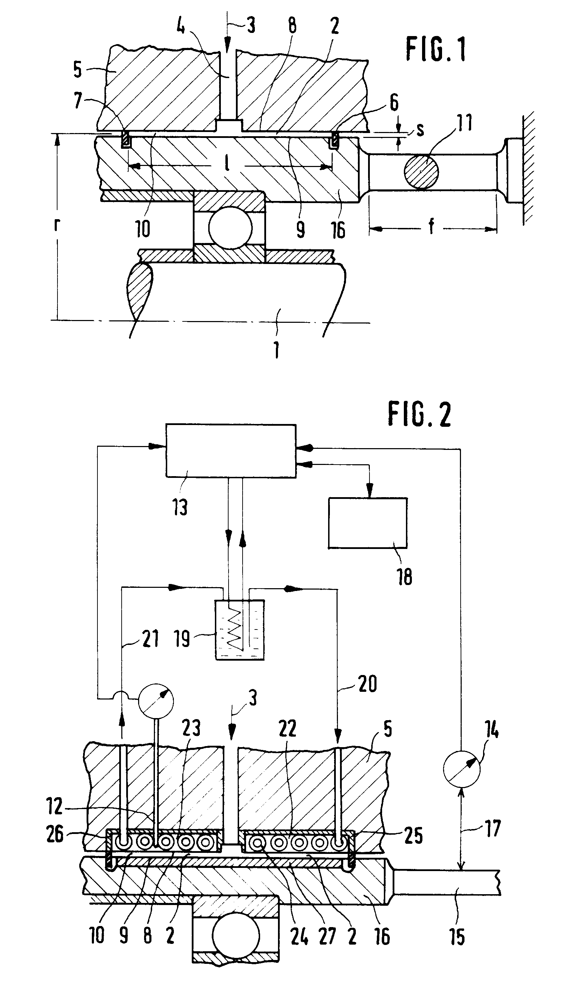

Fig. 1 zeigt ein Feder-Dämpfungssystem von auf Wälzlagern 28 rotierenden Massen, die mit einer Welle 1 kraft- oder formschlüssig verbunden sind ohne Regulierung der Dämpfung, wie es aus GB 2,218,751 (dort Fig. 2) bekannt ist. Eine Dämpfung wird mittels des Ölquetschspaltes 2, der in diesem Beispiel eine Spaltbreite s von 200 »m und eine Spaltlänge 1 von 60 mm bei einem Radius r von 75 mm aufweist. Der Ölquetschspalt 2 wird mit Öl über die Ölzufuhrbohrung 4 im Lagergehäuse 5 versorgt. Die Ölzufuhr 3 gleicht den Ölleckstrom, der über die Quetschdichtungen 6 und 7 entweicht, aus. Die Dämpfung wird festgelegt durch die Viskosität des Öls bei Betriebstemperatur, die Größe der Berührungsflächen 8 und 9 für den Ölquetschfilm 10 und der Spaltbreite s des Ölquetschspaltes 2. Die Federkonstante wird im wesentlichen durch die Federlänge f, den Federquerschnitt 11 und dem Werkstoff des Federkäfigs 16 bestimmt. Dieses Feder-Dämpfungssystem ist für einen vorgegebenen Betriebszustand der rotierenden Massen optimiert.

Fig. 2 zeigt ein Feder-Dämpfungssystem gemäß der Erfindung mit Regulierung der Dämpfung durch Änderung der Viskosität des Öls im Ölquetschspalt 2 über eine Temperatursteuerung des Ölquetschfilms 10. Dazu wird die Temperatur des Ölquetschfilms 10 mit einem Thermoelement 12 erfaßt und einem Mikroprozessor 13 zugeleitet, der gleichzeitig den Schwingungszustand des rotierenden Systems in Frequenz und Amplitude mittels eines Schwingungsaufnehmers 14 registriert. Dieser Schwingungsaufnehmer 14 steht mit einem der Federarme 15 des Federkäfigs 16 in Wirkverbindung 17. Schwingungs- und Temperaturdaten werden im Miktoprozessor 13 mit einem vorgegebenen Viskositäts-Temperatur Diagramm 18 verglichen und eine Heiz-/Kühlvorrichtung 19 vom Mikroprozessor 13 in dem Sinne gesteuert, daß sich eine optimale Laufruhe des rotierenden Systems einstellt. Die Heiz-/Kühlvorrichtung versorgt über die Zu- 20 und Rückleitung 21 Heiz-/Kühlelemente 22 und 23, die in Form von Kühlkanälen 24 einseitig den Ölquetschfilm 10 an seiner gehäuseseitigen Berührungsfläche 8 schraubenförmig umgeben. Zwischen Lagergehäuse 5 und Heiz-/Kühlelementen 22 und 23 sind Wärmedämmschichten 25 und 26 eingelassen, die eine Wärmebeeinflussung durch die Gehäusetemperatur vermindern. Die Berührungsfläche 9 des Ölquetschfilms 10 ist gleichzeitig die polierte Oberfläche einer Wärmedämmschicht 27, die den Ölquetschfilm thermisch vom Federkäfig 16 isoliert.

## Patentansprüche

1. Verfahren zur Regulierung der mittels Ölquetschfilm (10) in einem Ölquetschspalt (2) erfolgenden Dämpfung von auf Wälzlagern rotierenden Massen (1), dadurch gekennzeichnet, daß die momentane Viskosität des Öls durch Temperaturerfassung des Ölquetschfilms (10) und das Schwingungsverhalten der rotierenden Massen (1) in Frequenz und Amplitude gemessen werden, daß diese drei Signale über einen Rechner (13) miteinander verknüpft werden und daß der Rechner (19) die Temperatur einer Heiz-/Kühlvorrichtung (19) steuert, die das Öl im Ölquetschspalt (2) erwärmt/abkühlt und somit die Viskosität des Öls im Ölquetschspalt (2) so verändert, daß eine optimale Laufruhe der rotierenden Massen (1) erhalten wird.

2. Verfahren nach Anspruch 1, dadurch gekennzeichnet, daß die Temperatursteuerung des Öls durch Wärmetausch einer an den Ölquetschspalt (2) herangeführten Heiz-/Kühlflüssigkeit erfolgt.

3. Verfahren nach Anspruch 1, dadurch gekennzeichnet, daß die Temperatursteuerung mittels elektrischer Stromsteuerung von Peltierelementen erfolgt, die im Bereich des Ölquetschspaltes (2) angeordnet sind.

4. Verfahren nach Anspruch 1 bis 3, dadurch gekennzeichnet, daß die Dämpfungskonstante des rotierenden Systems um den Faktor 0,5 bis 2 durch Kühlung und Heizung des Ölquetschfilms (10) variiert wird.

5. Anordnung zur Regulierung der Dämpfung von auf Wälzlagern rotierenden Massen nach Anspruch 1, bestehend aus einem einen Ölquetschfilm (10) aufnehmenden Ölquetschspalt (2), der begrenzt ist durch die Berührungsfläche (8) eines ersten Teilsystems, das aus einem Gehäuse (5) besteht, und durch die Berührungsfläche eines zweiten Teilsystems, das ein radial federndes Teil (16) und rotierende Massen (1) beinhaltet, und bestehend aus einem Rechner (13), gekennzeichnet durch eine Heiz-/Kühlvorrichtung (19), um den Ölquetschfilm (10) zu heizen/kühlen, wobei die Heiz-/Kühlvorrichtung (19) mit einem Thermoelement (12) im Bereich der Berührungsflächen (8,9) die Temperatur des Ölquetschfilms (10) mißt, und das Thermoelement (12) mit dem Rechner (13) in Wirkverbindung steht, der gleichzeitig den Schwingungszustasnd des zweiten Teilsystems in Frequenz und Amplitude über einen Schwingungsaufnehmer (14) erfaßt, die empfangenen Daten mit einem vorgegebenen ViskositatsTemperatur-Diagramm (18) vergleicht und mit Heiz-/Kühlelementen (22,23) der Heiz-/Kühlvorrichtung (19) über einen Regler in Wirkverbindung steht.

6. Anordnung nach Anspruch 5, dadurch gekennzeichnet, daß die Heiz-/Kühlvorrichtung (19) Heiz-/Kühlflüssigkeit führende Kanäle aufweist, die die Berührungsfläche (8,9) des Ölquetschfilms umgeben und mit einem beheiz- und kühlbaren Heiz-/Kühlflüssigkeitsvorratsbehälter verbunden sind.

7. Anordnung nach Anspruch 5, dadurch gekennzeichnet, daß die Heiz/Kühlvorrichtung (19) Peltierelemente, die schalenförmig die Berührungsflächen des Ölquetschfilms umgeben, aufweist.

8. Anordnung nach Anspruch 5 bis 7, dadurch gekennzeichnet, daß mindestens die gehäuseseitige Berührungsfläche (8) des Ölquetschfilms eine Heiz-/Kühlvorrichtung (19) aufweist.

9. Anordnung nach Anspruch 5 bis 8, dadurch gekennzeichnet, daß die Kühl-/Heizkanäle oder Peltierelemente zum umgebenden Gehäuse hin eine Wärmedämmschicht (25,26) aufweisen.

## Claims

1. A method of regulating the damping of a mass (1) rowing on roller bearings which damping results from a squeezed-oil film (10) in an oil-squeezing gap (2), characterised in that the momentary viscosity of the oil is measured using temperature detection of the squeezed-oil film (10) and the oscillation behaviour of the rotating mass (1) is measured in frequency and amplitude, these three signals are linked to each other via a computer (13) and the computer (19) [sic] controls the temperature of a heating/cooling device (19) heating and cooling the oil in the oil-squeezing gap (2) and thus altering the viscosity of the oil in the oil-squeezing gap (2) in such a way that the smoothness of running of the rotating mass (1) is maintained at an optimum level.

2. A method according to Claim 1, characterised in that the temperature of the oil is controlled by heat exchange of a heating/cooling liquid fed to the oil-squeezing gap (2).

3. A method according to Claim 1, characterised in that the temperature is controlled by means of an electric current control from Peltier elements arranged in the region of the oil-squeezing gap (2).

4. A method according to Claims 1 to 3, characterised in that cooling and heating of the squeezed-oil film (10) alters the damping constant of the rotating system by a factor 0.5 to 2.

5. An arrangement for regulating the damping of a mass rotating on roller bearings according to Claim 1, comprising an oil-squeezing gap (2) which holds a squeezed-oil film (10) and which is bound by the contact surface (8) of a first subsystem, comprising a housing (5), and by the contact surface of a second subsystem containing a radial spring component (16) and rotating mass (1), and comprising a computer (13), characterised by a heating/cooling device (19) to heat or cool the squeezed-oil film (10), wherein the heating/cooling device (19) measures the temperature of the squeezed-oil film (10) using a thermal converter (12) in the region of the contact surfaces (8,9) and the thermal converter (12) is operatively connected to a computer (13) simultaneously measuring the oscillation state of the second subsystem in frequency and amplitude via a vibration pickup (14), comparing the data received with a standard viscosity temperature diagram (18) and being operatively connected to the heating/cooling elements (22,23) of the heating/cooling device (19) via a control unit.

6. An arrangement according to Claim 5, characterised in that the heating/cooling device (19) has channels conveying heating/cooling liquid and surrounding the contact surface [sic - surfaces] (8,9) of the squeezed-oil film and connected to the heatable and coolable heating/cooling liquid reservoir.

7. An arrangement according to Claim 5, characterised in that the heating/cooling device (19) has Peltier elements surrounding the contact surfaces of the squeezed-oil film in a saucer-type shape.

8. An arrangement according to Claims 5 to 7, characterised in that at least the contact surface (8) of the squeezed-oil film on the housing has a heating/cooling device (19).

9. An arrangement according to Claims 5 to 8, characterised in that the cooling/ heating channels or the Peltier elements have a heat-insulating layer (25,26) facing the surrounding housing.

## Revendications

1. Procédé de régulation de l'amortissement de masses rotatives (1) dans des paliers à roulement au moyen d'un film d'huile à écrasement (10), dans un intervalle (2) recevant le film d'huile caractérisé en ce qu'on mesure la viscosité instantanée de l'huile à l'aide de la mesure de la température du film d'huile (10) et du comportement d'oscillation des masses rotatives (1) en fréquence et en amplitude, on combine ces trois signaux par un calculateur (13) et le calculateur (13) commande la température du dispositif de chauffage/refroidissement (19) qui chauffe/refroidit l'huile dans cet intervalle (2) et modifie ainsi la viscosité d'huile dans l'intervalle d'huile pour obtenir une stabilité de course optimale des masses rotatives (1).

2. Procédé selon la revendication 1, caractérisé en ce que l'on commande la température par échange de chaleur avec un liquide de chauffage/refroidissement fourni à l'intervalle d'huile (2).

3. Procédé selon la revendication 1, caractérisé en ce que la commande de la température se fait en commandant l'alimentation électrique d'éléments à effet Peltier disposés dans la zone de l'intervalle d'huile (2).

4. Procédé selon les revendications 1 à 3, caractérisé en ce qu'on fait varier la constante d'amortissement du système rotatif d'un facteur 0,05 à 2 en refroidissant et en réchauffant le film d'huile (10).

5. Dispositif pour la régulation de l'amortissement de masses (1) rotatives dans des paliers selon la revendication 1 comprenant un intervalle de film d'huile (2) recevant un film d'huile (10), qui est délimité par une surface de contact (8) d'une première partie de système se composant d'un boîtier (5) et par la surface de contact d'une seconde partie de système ayant une pièce à élasticité radiale (16) et les masses rotatives (1) et un calculateur (13) caractérisé par un dispositif de chauffage/refroidissement (19) pour chauffer/refroidir le film d'huile (10), le dispositif de chauffage/refroidissement (19) mesurant la température du film d'huile (10) dans la zone de la surface de contact (8, 9) au moyen d'un thermocouple (12) ; le thermocouple (12) est relié au calculateur (13) qui détermine simultanément l'état d'oscillation de la seconde partie de système en fréquence au moyen d'un capteur d'oscillations (14), compare les données obtenues avec un diagramme prédéterminé viscosité-température et est relié par un régulateur aux éléments de chauffage/refroidissement (22, 23) du dispositif de chauffage/refroidissement (19).

6. Dispositif selon la revendication 5, caractérisé en ce que le dispositif de chauffage/refroidissement (19) présente des canaux pour un liquide/refroidissement, qui entourent les surfaces de contact (8, 9) du film d'huile et sont reliés à un réservoir de liquide de chauffage/refroidissement pouvant être chauffé ou refroidi.

7. Dispositif selon la revendication 5, caractérisée en ce que le dispositif de chauffage/refroidissement comporte des éléments à effet Peltier en forme de coupelles entourant la surface de contact du film d'huile.

8. Procédé selon les revendications 5 à 7, caractérisé en ce que la surface de contact (8) du film d'huile du côté du boîtier présente un dispositif de chauffage/refroidissement (19).

9. Dispositif selon les revendications 5 à 8, caractérisé en ce que les canaux de chauffage/refroidissement ou les éléments à effet Peltier présentent une couche d'isolation thermique (25, 26) du côté du boîtier qui les entoure.
